Europäisches Patentamt

European Patent Office

Office européen des brevets

(11) Publication number: **0 247 008**
B1

# EUROPEAN PATENT SPECIFICATION

(45) Date of publication of the patent specification:
07.02.90

(21) Application number: 87830176.1

(22) Date of filing: 11.05.87

(51) Int. Cl.⁴: **B60K 17/34,** B60K 17/20,
F16D 35/00, F16H 1/455

(54) Improvements in four-wheel drive transmission systems for motor vehicles.

(30) Priority: 16.05.86 IT 6740786

(43) Date of publication of application:
25.11.87 Bulletin 87/48

(45) Publication of the grant of the patent:
07.02.90 Bulletin 90/6

(84) Designated Contracting States:
DE ES FR GB SE

(56) References cited:
EP-A- 0 118 155
EP-A- 0 131 892
EP-A- 0 132 238
EP-A- 0 175 674
EP-A- 0 198 812
WO-A-84/04792
JP-A-60 236 839
US-A- 2 768 538

(73) Proprietor: FIAT AUTO S.p.A., Corso Giovanni
Agnelli 200, I-10135 Torino(IT)

(72) Inventor: Cordero, Federico, Via Passo Buole 166,
I-10135 Torino(IT)
Inventor: Faldella, Roberto, Via Filadelfia 187,
I-10137 Torino(IT)
Inventor: Falzoni, Gianluigi, Via Malta 36/10 bis,
· I-10141 Torino(IT)

(74) Representative: Buzzi, Franco et al, c/o
Jacobacci-Casetta & Perani S.p.A. Via Alfieri, 17,
I-10121 Torino(IT)

## Description

The present invention relates to transmission systems for motor vehicles with a front engine and gear-box disposed transversely with respect to the longitudinal direction of the motor vehicle.

More particularly, the invention relates to a transmission system of the type comprising:
- a front differential having a planet carrier driven by a gear carried by the output shaft of the gearbox for the transmission of torque to the half-shafts of the front wheels of the motor vehicle, the said planet carrier having a tubular hub coaxial with one of the said half-shafts,
- a rear differential for the transmission of driving torque to the rear wheels of the motor vehicle,
- an intermediate differential constituted by an epicyclic gear mechanism which is enclosed with the front differential in a casing rigidly connected to the gear-box casing, this epicyclic gear mechanism including
a ring gear driven by the said gear carried by the secondary shaft of the gear-box,
a sun wheel rigidly connected to the planet carrier of the front differential, and
a planet carrier carrying a series of planet gears interposed between the sun wheel and the ring gear and having a tubular hub coaxially surrounding the said tubular hub of the planet carrier of the front differential,
- a bevel gear rigidly connected to the planet carrier of the intermediate differential,
- a bevel pinion meshing with the said bevel gear and kinematically connected with the rear differential,
- means for coupling the said tubular hubs of the front differential for rotation with those of the intermediate differential,
and in which the said epicyclic gear mechanism is contained in a portion of the gear-box casing, whilst the front differential is contained in a separate casing fixed to the gear-box casing.

A transmission system of this type is described and illustrated in Italian Patent application No. 67760-A/83 and in the corresponding European Patent application No. 132,238. In this known transmission system the means for coupling the said tubular hubs of the front differential for rotation with those of the intermediate differential are constituted by a sleeve mounted by means of a splined coupling on the tubular hub of the front differential and provided with teeth for engaging corresponding teeth of the tubular hub of the intermediate differential following its externally controlled axial displacement, to obtain locking of the intermediate differential.

The present invention constitutes an improvement in the said known system, and has in particular the object of improving its operating effectiveness, constructional simplicity and flexibility of application.

The main characteristic of the invention lies in the fact that the said means for coupling the said tubular hubs of the front differential for rotation with those of the intermediate differential are constituted by a device for limiting the slip of the epicyclic gear mechanism, fitted in a casing fixed to the said separate casing containing the front differential and having a quick-release axial cover disposed at the outer end of the said half-shaft.

The slip-limiting device is advantageously constituted by a viscous-controlled coupling of the FERGUSON type, or alternatively by a hydraulic coupling or by an electronically-controlled friction coupling.

The arrangement of this slip-limiting device, and, in particular, the use of the quick-release axial cover, significantly simplifies its accessibility and allows it to be replaced easily when necessary. This is particularly advantageous if the transmission system according to the invention is applied to vehicles intended for competitions, in that the possibility of rapidly and easily replacing the slip-limiter device permits the transmission system to be adapted to the exigencies of the competition.

The invention will now be described in detail with reference to the appended drawings, provided purely by way of non-limitative example, in which:

Figure 1 is a schematic perspective view of the transmission system of the invention; and

Figure 2 is a partial view in section of a detail of the transmission system of Figure 1.

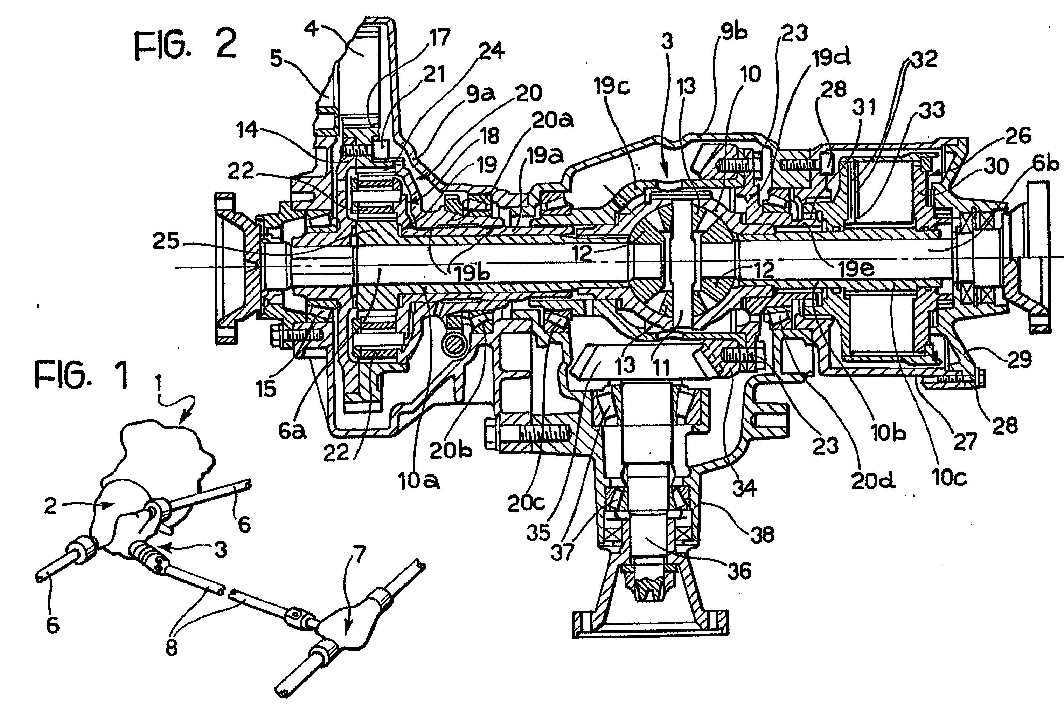

In Figure 1 an internal combustion engine intended to be mounted in the front part of a motor vehicle with its axis disposed transversely with respect to the longitudinal direction of the vehicle is generally indicated with the reference numeral 1. The engine 1 is provided with a speed-change gear-box 2 of the type having constantly meshing gears, with a drive shaft and a driven shaft (not illustrated) also directed transversely with respect to the longitudinal direction of the vehicle.

The reference numeral 3 (see also Figure 2) indicates a front differential which is driven by a gear 4 carried by the secondary shaft 5 of the gear-box 2, via an epicyclic gear mechanism 18 which, as will become more clear below, functions as an intermediate differential. The front differential 3 transmits the drive torque to the front wheels of the motor vehicle via two half-shafts 6a,6b.

As illustrated in Figure 1, the transmission system further includes a rear differential 7 for transmission of the drive torque to the rear wheels of the motor vehicle, which is connected by a transmission shaft 8 to the epicyclic gear mechanism 18 functioning as the intermediate differential in the manner described in detail below.

In a manner similar to that illustrated in the earlier Italian Patent application 67760-A/83 and in the corresponding European Patent application 132,238, the front differential 3 and the intermediate differential 18 are both contained (see Figure 2) in a casing rigidly secured to the gear-box casing. In more detail, the intermediate differential 18 is contained in a portion 9a of the gear-box casing, whilst the front differential 3 is contained in a separate casing 9b fixed to the portion 9a. In this way, when it is desired to modify a transmission system initially arranged only for front wheel drive so as to allow drive also to be transmitted to the rear wheels, it is not necessary to modify the gear-box casing, which makes the operations necessary for the said adaptation simpler and more economic.

The differential 3 is of the known type having a planet carrier 10 which has two opposite hubs 10a, 10b within which the half-shafts 6a,6b are rotatably mounted for transmission of the drive torque to the front wheels of the motor vehicle. In the facing ends of the two half-shafts 6a, 6b are mounted two bevel gears 12 which mesh with differential pinions 13 in turn supported in a rotatable manner about a pin 11 fixed to the planet carrier 10.

The reference numeral 14 indicates a gear mounted rotatably by means of a taper rolling bearing 15 within the gear-box casing. The gear wheel 14 has an outer ring of teeth 17 meshing with the gear 4 carried by the secondary shaft 5 of the gear-box.

As already specified, the epicyclic gear mechanism 18 functions as an intermediate differential and is able correctly to divide the driving torque between the front differential 3 and the rear differential 7 of the transmission system. This epicyclic gear mechanism includes a planet carrier 19 having a tubular hub 19a surrounding the tubular hub 10a of the planet carrier 10. The hub 19a is freely rotatably mounted by means of rollers 19b within a hub 20a forming part of a wheel 20 fixed by bolts 21 to the gear wheel 14. This hub 20a is rotatably mounted within the casing of the gear-box by means of a roller bearing 20b.

The planet carrier 19 carries a plurality of pairs of planet gears 22 meshing with one another. One of the planet gears of each pair meshes with an inner ring gear 24 carried by the wheel 20, and the other meshes with the teeth of a sun wheel 25 formed on the tubular hub 10a, and is therefore rigidly connected to the planet carrier 10 of the front differential 3.

To the hub 19a of the planet carrier 19 of the intermediate differential 18 there is fixed a bell-shaped element 19c which extends into the casing 9b and surrounds the planet carrier 10 of the front differential 3. The bell-shaped element 19c is rotatably mounted within the casing 9b by roller bearings 20c. On the larger diameter end of the bell-shaped element 19c a wheel 19d is fixed by means of screws 23, and is rotatably mounted within the casing 9b by a roller bearing 20d. The wheel 19d carries a tubular hub 19e which surrounds the tubular hub 10b of the planet carrier 10 coaxially of the half-shaft 6b.

A viscous-controlled coupling of the FERGUSON type, generally known per se, and therefore not described in detail, is generally indicated with the reference numeral 26. This coupling is contained in a terminal casing 27 fixed by screws 28 to the casing 9b. This casing 27 is closed on the side opposite the casing 9d by an axial cover 28 of annular form which is situated at the outer end of the axle 6b and is fixed to the casing 27 in a quick-release manner by means of screws 29.

The viscous-controlled coupling 26 is constituted in a known manner by a cylinder 30 coaxially mounted on the tubular hub 10b and coupled for rotation with the tubular hub 19e by a toothed coupling 31. The cylinder 26 contains, in a known manner, two series of drive discs, schematically indicated 32, 33,the first of which are coupled for rotation with the cylinder 26 and the second of which are coupled for rotation with a splined portion 10c of the tubular hub 10b.

The viscous-controlled coupling 26 constitutes a slip-limiting device of the epicyclic gear mechanism 19 and is able to couple the planet carrier 19 of the epicyclic gear mechanism 18 for rotation with the planet carrier 10 of the front differential 3 up to the point of locking of the intermediate differential.

On the bell-shaped element 19c rigidly connected to the planet carrier 19 of the epicyclic gear 18 there is mounted a bevel gear 34 meshing with a bevel pinion 35 for transferring drive to the rear differential 7. The bevel pinion 35 is disposed at one end of the shaft 36 rotatably mounted by roller bearings 37 within a cylindrical projection 38 forming part of the casing 9d. The end of the shaft 36 opposite the bevel pinion 35 is intended to be connected by means of a constant velocity joint to the transmission shaft 8 for transferring drive torque to the rear differential 7.

In operation, the drive torque is transmitted to the half-shaft 6a,6b of the front wheels from the gear 4 carried by the secondary shaft of the gear-box via the wheel 14, the ring gear 24, the planet gears 22, the sun wheel 25 and the planet carrier 10 of the front differential.

At the same time,the drive torque is transmitted also to the shaft 36 for driving the rear differential from the planet carrier 10 of the front differential 3 via the sun wheel 25, the planet gears 22, the planet carrier 19 and the bevel gears 34,35. The viscous-controlled coupling 26 acts in such a way as to limit the slip of the epicyclic gear mechanism constituting the intermediate differential 18 until the extreme condition in which the gear 28 is rigidly connected for rotation with the planet carrier 10 of the front differential 3. In this latter condition the intermediate differential 18 is locked.

It is necessary to note that the slip-limiter 26 could be constituted by a hydraulic coupling or by an electronically-controlled friction coupling instead of by a FERGUSON viscosity-controlled coupling.

In all cases,the arrangement of the limiter 26 within the casing 27 provided with the cover 28 ensures that it is conveniently and easily accessible from the outside simply by removing the cover 29 so as to facilitate maintenance and possible replacement with a limiter of different characteristics. This, as mentioned, is particularly advantageous in the case of the use of the transmission system according to the invention on competition vehicles in that it permits a rapid adaptation of the behaviour of the transmission to the characteristics of the competition.

Moreover, the arrangement of the slip-limiter 26 allows the construction of the transmission to be simplified and at the same time allows an easier cooling and a more effective lubrication of the limiter and its associated bearings.

**Claims**

1. A transmission system for motor vehicles having a front engine and gear-box disposed transversely with respect to the longitudinal direction of the motor vehicle, comprising,
- a front differential (3) having a planet carrier (10) driven by a gear (4) carried by the driven shaft of the gear-box for transmission of driving torque to the half-shafts (6a,6b) of the front wheels of the motor vehicle, the said planet carrier (10) having a tubular hub (10b) extending coaxially of one of the said half-shafts (6b),
- a rear differential (7) for the transmission of the drive torque to the rear wheels of the motor vehicle,
- an intermediate differential (18) constituted by an epicyclic gear mechanism which is enclosed, together with the front differential'in a casing rigidly connected to the gear-box casing, this epicyclic gear mechanism (18) including:
a ring gear (24) driven by the said gear (4) carried by the said driven shaft of the gear-box,
a sun wheel (25) rigidly connected to the planet carrier (10) of the front differential (3), and
a planet carrier (19) carrying a series of planets (22) interposed between the sun wheel (25) and the ring gear (24) and having a tubular hub (19e) coaxially surrounding the said tubular hub (10b) of the planet carrier (10) of the front differential (3),
- a bevel gear (34) rigidly connected to the planet carrier (19) of the intermediate differential (18),
- a bevel pinion (35) meshing with the said bevel gear (34) and kinematically connected to the rear differential (7),
- means for coupling the said tubular hubs (10b,19e) of the front differential (3) for rotation with the intermediate differential (18),
and in which the said epicyclic gear mechanism (18) is contained in a portion (9a) of the gear-box casing, whilst the front differential (3) is contained in a separate casing (9b) fixed to the casing of the gear-box (9a),
characterised in that the said means for coupling the said tubular hubs (10b,19e) of the front differential (3) for rotation with the intermediate differential (18) are constituted by a device (26) for limiting the slip of the epicyclic gear mechanism (18), fitted in a casing (27) fixed to the said separate casing (9b) containing the front differential (3) and having a quick-release axial cover (28) disposed at the outer end of the said half-shaft (6b).

2. A system according to claim 1, characterised in that the said slip-limiter device (26) is constituted by a viscous-controlled coupling of the FERGUSON type.

3. A system according to claim 1, characterised in that the said slip-limiter device is constituted by a hydraulic coupling.

4. A system according to claim 1, characterised in that the said slip-limiter device is constituted by an electronically-controlled friction coupling.

**Patentansprüche**

1. Kraftübertragungssystem für Kraftfahrzeuge mit einem Frontmotor und einem quer zur Längsrichtung des Kraftfahrzeug angeordneten Schaltgetriebe, mit einem vorderen Differential (3) mit einem Planetenträger (10), der von einem von der angetriebenen Welle des Schaltgetriebes getragenen Zahnrad (4) angetrieben wird und zur Übertragung eines Antriebsmoments auf die Halbwellen (6a, 6b) der Vorderräder des Kraftfahrzeugs dient, wobei der Planetenträger (10) eine rohrförmige Nabe (10b) besitzt, die koaxial zu einer (6b) der genannten Halbwellen angeordnet ist, mit einem hinteren Differential (7) zur Übertragung des Antriebsmoments auf die Hinterräder des Kraftfahrzeugs, mit einem Zwischendifferential (18), das aus einem epizyklischen Getriebemechanismus besteht, der zusammen mit dem vorderen Differential in einem mit dem Gehäuse des Schaltgetriebes starr verbundenen Gehäuse angeordnet ist, wobei dieser Getriebemechanismus (18) folgende Teile aufweist:
— ein Ringzahnrad (24), das von dem von der angetriebenen Welle des Schaltgetriebes getragenen Zahnrad (4) angetrieben ist,
— ein Sonnenrad (25), das mit dem Planetenträger (10) des vorderen Differentials (3) starr verbunden ist, und
— einen Planetenträger (19), der eine Reihe von zwischen dem Sonnenrad (25) und dem Ringzahnrad (24) angeordneten Planetenrädern (22) trägt und eine rohrförmige Nabe (19e) besitzt, die die rohrförmige Nabe (10b) des Planetenträgers (10) des vorderen Differentials (3) koaxial umgibt, ferner mit einem mit dem Planetenträger (19) des Zwischendifferentials (18) starr verbundenen Kegelzahnrad (34), mit einem mit diesem Kegelzahnrad (34) kämmenden Kegelritzel (35), das kinematisch mit dem hinteren Differential (7) verbunden ist, sowie mit Mitteln zur drehfesten Kupplung der rohrförmigen Naben (10b, 19e) des vorderen Differentials (3) mit dem Zwischendifferential (18), wobei der epizyklische Getriebemechanismus (18) in einem Abschnitt (9a) des Schaltgetriebegehäuses angeordnet ist, während das vordere Differential (3) in einem separaten Gehäuse (9b) angeordnet ist, das an dem Schaltgetriebegehäuse (9a) befestigt ist, dadurch gekennzeichnet, daß die Mittel zur Kupplung der rohrförmigen Naben (10b, 19e) des vorderen Differentials (3) mit dem Zwischendifferential (18) aus einer Vorrichtung (26) bestehen, die den Schlupf des epizyklischen Getriebemechanismus (18) begrenzt und die in einem Gehäuse (27) angeordnet ist, das an dem das vordere Differential (3) enthaltenden separaten Gehäuse (9b) befestigt ist und eine schnell lösbare axiale Abdeckung (28) besitzt, die an dem äußeren Ende der genannten Halbwelle (6b) angeordnet ist.

2. System nach Anspruch 1, dadurch gekennzeichnet, daß die Vorrichtung (26) zur Schlupfbegrenzung eine viskosegesteuerte Kupplung vom FERGUSON-Typ ist.

3. System nach Anspruch 1, dadurch gekennzeichnet, daß die Vorrichtung zur Schlupfbegrenzung eine hydraulische Kupplung ist.

4. System nach Anspruch 1, dadurch gekennzeichnet, daß die Vorrichtung zur Schlupfbegrenzung eine elektronisch gesteuerte Reibungskupplung ist.

**Revendications**

1. Système de transmission pour véhicules automobiles comportant un groupe moteur avant et boîte de vitesses disposés transversalement à la direction longitudinale du véhicule, qui comprend,
- un différentiel avant (3) comprenant un porte-satellites (10) entraîné par une roue dentée (4) portée par l'arbre de sortie de la boîte de vitesses et destiné à transmettre le couple moteur aux demi-arbres (6a, 6b) des roues avant du véhicule automobile, ledit porte-satellites (10) possédant un moyeu tubulaire (10b) coaxial à l'un (6b) desdits demi-arbres,
- un différentiel arrière (7) destiné à transmettre le couple moteur aux roues arrière du véhicule automobile;
- un différentiel intermédiaire (18) constitué par un mécanisme à engrenages épicycloïdaux qui est enfermé avec le différentiel avant dans un carter fixé rigidement au carter de la boîte de vitesses, ce mécanisme à engranages épicycloïdaux (18) comprenant: une couronne dentée (24) entraînée par ladite roue dentée portée par l'arbre secondaire de la boîte de vitesses, une roue planétaire (25) rigidement solidaire du porte-satellites (10) du différentiel avant (3), et un porte-satellites (19) qui porte une série de pignons satellites (22) interposés entre la roue planétaire (25) et la couronne dentée (24) et qui possède un moyeu tubulaire (19e) qui entoure coaxialement ledit moyeu tubulaire (10b) du porte-satellites (10) du différentiel avant (3),
- une roue dentée conique (34) rigidement solidaire du porte-satellites du différentiel intermédiaire (18),
- un pignon conique (35) qui engrène avec ladite roue dentée conique (34) et est relié cinématiquement au différentiel arrière (7),
- des moyens destinée à accoupler lesdits moyeux tubulaires (10b, 19e) du différentiel (3) en rotation à ceux du différentiel intermédiaire (18), et dans lequel ledit mécanisme à engrenages épicycloïdaux (18) est contenu dans une portion (9a) du carter de la boîte de vitesse tandis que le différentiel avant (3) est contenu dans un carter séparé (9b) fixé au carter de la boîte de vitesses (9a), caractérisé en ce que lesdits moyens destinés à accoupler lesdits moyeux tubulaires (10b, 19e) du différentiel avant (3) en rotation au différentiel intermédiaire (18) sont constitués par un dispositif (26) destiné à limiter le glissement du mécanisme à engrenages épicycloïdaux (18), monté dans un carter (27) qui est fixé audit carter séparé (9b) contenant le différentiel avant (3) et qui possède un flasque de fermeture (28) axial à démontage rapide disposé à l'extrémité extérieure dudit demi-arbre (6b).

2. Système selon la revendication 1, caractérisé en ce que ledit dispositif limiteur de glissement (26) est constitué par un visco-coupleur du type FERGUSON.

3. Système selon la revendication 1, caractérisé en ce que ledit dispositif limiteur de glissement est constitué par un coupleur hydraulique.

4. Système selon la revendication 1, caractérisé en ce que ledit dispositif limiteur de glissement est constitué par un coupleur à friction à commande électronique.

FIG. 2

FIG. 1